# EUROPEAN PATENT APPLICATION

(11) **EP 4 607 371 A1**
(43) Date of publication of application: **27.08.2025**
(21) Application number: 23879137.0
(22) Date of filing: 18.10.2023
(51) Int. Cl.: G06F 16/901

(54) **MEDIA CONTENT PROCESSING METHOD AND APPARATUS, AND ELECTRONIC DEVICE**

(30) Priority: 18.10.2022 CN 202211275995
(71) Applicant: Beijing Zitiao Network Technology Co., Ltd., Beijing 100190 (CN)
(72) Inventor: HUA, Cong, Beijing 100028 (CN); GAO, Xiangyu, Beijing 100028 (CN)
(74) Representative: Marks & Clerk LLP
(86) International application number: PCT/CN2023/125213
(87) International publication number: WO 2024/083149

(57) **Abstract**

Disclosed in the embodiments of the present disclosure are a media content processing method and apparatus and an electronic device. A specific embodiment of the method comprises: in response to a playback request for a target media content on a personal page, displaying a media content playback page of the target media content; and, in response to a processing request which acts on the media content playback page and targets the target media content, adding the target media content to a target media content set. The method achieves adding a media content to a target media content set quickly and conveniently on a personal page of a user, thereby improving user experience.

## Description

### CROSS-REFERENCING OF RELEVANT APPLICATIONS

This application claims the benefit of Chinese patent application No. 202211275995.3, filed on October 18, 2022, entitled "MEDIA CONTENT PROCESSING METHOD AND APPARATUS, AND ELECTRONIC DEVICE", which is incorporated herein by reference in its entirety.

### TECHNICAL FIELD

The present disclosure relates to the technical field of computers, and in particular, to a media content processing method and apparatus, and an electronic device.

### BACKGROUND

With the development of computers, users can create their own media contents, and the created media contents can be managed through media content sets.

A media content set can be understood as a set of a plurality of media contents. When a user creates a large number of media contents, the media contents can be classified through media content sets, so that related media contents can belong to the same set.

### SUMMARY

Contents of this disclosure are provided to introduce concepts in a simplified form that are described in detail in the specific implementations that follow. Contents of this disclosure are not intended to identify key features or essential features of the claimed technical solution, nor are they intended to be used to limit the scope of the claimed technical solution.

In a first aspect, provided in an embodiment of the present disclosure is a media content processing method, including: in response to a playback request for a target media content on a personal page, displaying a media content playback page of the target media content; and in response to a processing request for the target media content that acts on the media content playback page, adding the target media content to a target media content set.

In a second aspect, provided in an embodiment of the present disclosure is a media content processing apparatus, including: a display unit, configured to, in response to a playback request for a target media content on a personal page, display a media content playback page of the target media content; and a processing unit, configured to, in response to a processing request for the target media content that acts on the media content playback page, add the target media content to a target media content set.

In a third aspect, provided in an embodiment of the present disclosure is an electronic device, including: one or more processors; and a storage apparatus, configured to store one or more programs, when the one or more programs are executed by the one or more processors, the one or more processors implementing the media content processing method as claimed in the first aspect.

In a fourth aspect, provided in an embodiment of the present disclosure is a computer-readable medium having a computer program stored thereon, which, when executed by a processor, implements the media content processing method as claimed in the first aspect.

According to the media content processing method and apparatus, and electronic device provided in the embodiments of the present disclosure, a processing request for a target media content can be initiated for a target media content playback page on a personal page, and the target media content can be added to a target media content set. Through this media content processing method, users can rapidly and efficiently process media contents while playing the media contents on their personal pages.

Therefore, media contents can be rapidly and conveniently added to a target media content set on a user's personal page through this technical solution, improving the user experience.

### BRIEF DESCRIPTION OF THE DRAWINGS

The above and other features, advantages and aspects of various embodiments of the present disclosure will become more apparent with reference to the following specific implementations in conjunction with the accompanying drawings. Throughout the accompanying drawings, the same or similar reference numerals refer to the same or similar elements. It is to be understood that the accompanying drawings are schematic and that objects and elements are not necessarily drawn to scale.
Fig. 1 is a flowchart of an embodiment of a media content processing method according to the present disclosure;
Figs. 2A-2B are schematic diagrams of an application scenario of the media content processing method according to the present disclosure;
Figs. 3A-3B are schematic diagrams of an application scenario of the media content processing method according to the present disclosure;
Figs. 3C-3D are schematic diagrams of an application scenario of the media content processing method according to the present disclosure;
Fig. 4 is a schematic structural diagram of an embodiment of a media content processing apparatus according to the present disclosure;
Fig. 5 is an exemplary system architecture in which the media content processing method of an embodiment of the present disclosure can be applied;
Fig. 6 is a schematic diagram of a basic structure of an electronic device provided according to an embodiment of the present disclosure.

### DETAILED DESCRIPTION

Embodiments of the present disclosure will be described in more detail below with reference to the accompanying drawings. Although certain embodiments of the present disclosure are shown in the accompanying drawings, it should be understood that the present disclosure can be implemented in various forms and should not be construed as limited to the embodiments set forth herein. Instead, these embodiments are provided to bring a more thorough and complete understanding of the present disclosure. It should be understood that the accompanying drawings and embodiments of the present disclosure are merely used for illustrative purposes and are not used to limit the scope of protection of the present disclosure.

It should be understood that the various steps described in the method implementations of the present disclosure may be executed in different orders and/or in parallel. Furthermore, method implementations may include additional steps and/or omit performing illustrated steps. The scope of the present disclosure is not limited in this regard.

The term "include" and variations thereof as used herein are open inclusions, i.e., "including but not limited to". The term "based on" means "based at least in part on". The term "one embodiment" means "at least one embodiment"; the term "another embodiment" means "at least one additional embodiment"; the term "some embodiments" means "at least some embodiments". Relevant definitions of other terms are given in the following description.

It needs to be noted that the concepts such as "first" and "second" mentioned in the present disclosure are merely used to distinguish different apparatuses, modules or units, and are not used to limit the order or interdependence of the functions performed by these apparatuses, modules or units.

It needs to be noted that the modifications of "one" and "plurality" mentioned in the present disclosure are illustrative rather than restrictive, and those skilled in the art should understand that unless otherwise clearly indicated in the context, they should be understood as "one or more".

The names of messages or information interacted between a plurality of apparatuses in the implementations of the present disclosure are merely used for illustrative purposes and are not used to limit the scope of these messages or information.

With the development of computers, users can create their own media contents on different platforms, for example, creating their own short video works on a short video platform; for example, creating their own music works on a music platform, etc. Therefore, in the implementations of the present disclosure, the media contents may be single media contents such as short videos, music, novels, etc., or may be combined media contents formed by combining these single media contents.

In the implementations of the present disclosure, creation can be understood as a process of production + uploading. After the user completes the production of a media content and uploads same to the corresponding platform, the creation of the media content is completed.

Among the media contents created by the user, some of the media contents may be related to each other. For example, if a plurality of novel fragments belong to the same novel, the plurality of novel fragments are related; if the objects involved in a plurality of short videos belong to the same type of objects, the plurality of short videos are related. For another example, some users create commentary short videos, which narrate the plot of a TV series or a movie. Usually, the plot of a TV series or a movie requires a plurality of short videos to narrate. Therefore, the plurality of commentary short videos corresponding to the plot of the TV series or the movie are related.

On a media content platform, there are two types of users involved: one is the user who creates media contents, and the other is the user who browses media contents. On the platform, a large number of users create media contents every day, and also a large number of users browse media contents. These created media contents can be pushed to users in the form of media content streams.

Therefore, a media content set function is usually configured on the media content platform, which function allows users to manage the created media contents. For example, after creating a media content set, the user can enter the media content set to upload media contents; or, after creating media contents, the user can create a corresponding media content set, etc. It is also possible for users to browse related media contents through media content sets when browsing media contents. For example, after browsing a media content, if it is found that the media content belongs to a media content set, the user can enter the media content set to browse other related media contents, etc.

In the related art, the management of media content sets includes two forms: one is to create a corresponding media content set based on the created media content; the other is to add a media content based on the created media content set.

However, neither of these two forms can realize the rapid addition of media contents to a target media content set, making the convenience and efficiency of media content management not high enough.

In addition, in the related art, users can view published videos on their personal pages, but cannot add published videos to corresponding video sets on their personal pages, which affects the user experience.

On this basis, provided in the implementations of the present disclosure is a media content processing solution. Accordingly, media contents can be rapidly and conveniently added to a target media content set on a user's personal page, improving the user experience.

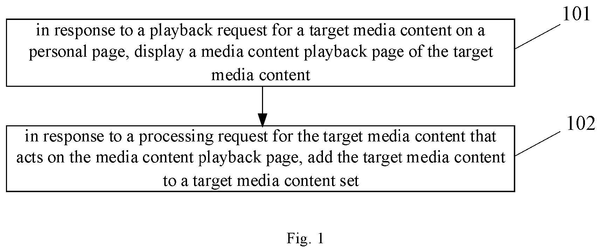

Reference is made to Fig. 1, which shows a flowchart of an embodiment of a media content processing method according to the present disclosure. The media content processing method can be applied to a terminal device. As shown in Fig. 1, the media content processing method includes the following steps:
Step 101, in response to a playback request for a target media content on a personal page, display a media content playback page of the target media content.

The personal page can be understood as the user's personal homepage, that is, the user's personal page on the media content platform. A plurality of media contents, which are media contents created by the user, may be displayed on the personal page.

Based on the plurality of media contents, the user may select a target media content therefrom to generate a playback request for the target media content on the personal page. Then, a media content playback page of the target media content is displayed.

Step 102, in response to a processing request for the target media content on the media content playback page, add the target media content to a target media content set.

The processing request is directed to the target media content, and is implemented on the above media content playback page. In other words, the processing request acts on the above media content playback page.

According to the solution provided in the embodiments of the present disclosure, assuming that a user finds that a video is highly related to an existing video set or needs to add a video to a newly created set while viewing published videos on his/her personal page, the user can directly add the video to the set. Therefore, the need to add videos published on personal pages to sets can be conveniently and efficiently met.

As an optional implementation, step 102 includes: in response to a trigger operation acting on the media content playback page, displaying a media content processing page, the media content processing page including an add-to-set control; in response to a trigger operation on the add-to-set control, displaying a media content set page, the media content set page including at least one media content set; and in response to receiving a selection instruction for a target media content set in the at least one media content set, adding the target media content to the target media content set.

It can be understood that, in addition to the add-to-set control, other controls may also be included on the media content processing page. These other controls may correspond to function configuration of the media content platform, and one function corresponds to one control usually. Since different function options are triggered correspondingly when different instruction trigger methods are adopted, these other controls may also correspond to the trigger methods of the media content processing instructions.

In some embodiments, the media content playback page is, for example, a video playback page, a music playback page, etc.

In an implementation of the present disclosure, the media content processing page can be directly called out based on the media content playback page. Then, the user can add media contents to media content sets while browsing the media contents on a personal page.

Compared with the related art, more convenient and efficient media content processing can be achieved, and a convenient and efficient processing link from media contents to media content sets can be formed.

In some application scenarios, the trigger operation acting on the media content playback page may be a long-press interactive operation on the media content playback page.

The long-press interactive operation can be understood as performing a long press operation at an interactive position on the media content playback page. The interactive position may be any position where no interactive controls are set.

In other application scenarios, a sharing control is displayed on the media content playback page; in response to a trigger operation acting on the media content playback page, displaying a media content processing page includes: in response to a sharing control trigger operation acting on the media content playback page, displaying a sharing panel, the sharing panel including an add-to-set control.

The add-to-set control is integrated by means of the sharing panel, and thus users' related needs for set addition and sharing can be met more efficiently, reducing costs and improving the interactive experience.

In this implementation, in addition to the sharing control, other controls may also be included on the media content playback page, such as a like control, a comment control, and a favorite control.

Regardless of which of the above implementations is adopted, the display of the media content processing page can be triggered on the media content playback page.

In some embodiments, it is assumed that the trigger operation on the media content playback page is a long-press interactive operation, and the displayed media content processing page is page A, as well as that the trigger operation on the media content playback page is a sharing control trigger operation, and the displayed media content processing page is page B. Then, although both page A and page B include the add-to-set control, other controls included on the page A and page B may be different.

In some embodiments, the media content processing page is displayed based on the media content playback page. For example, the media content processing page occupies a portion of the media content playback page, or the media content processing page is displayed in the form of a window on the media content playback page.

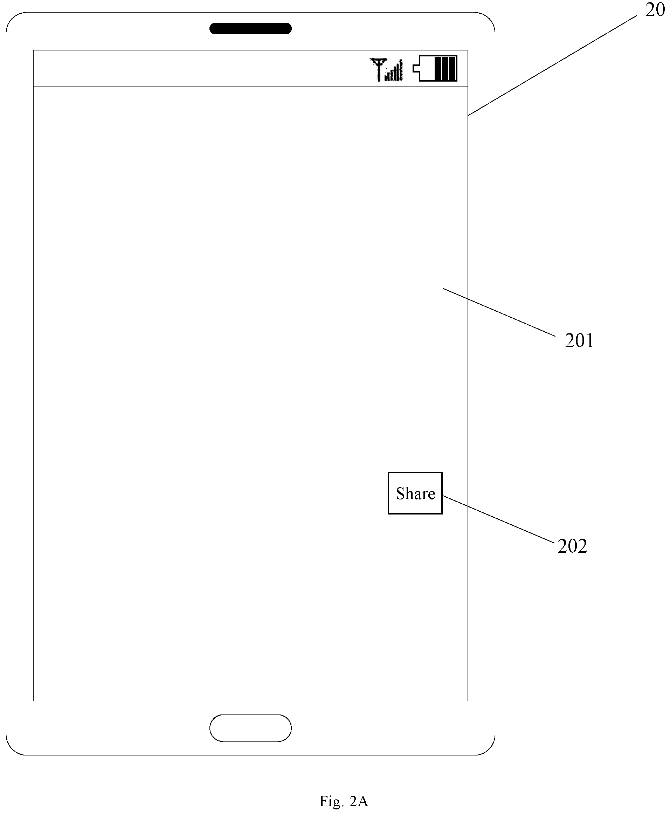

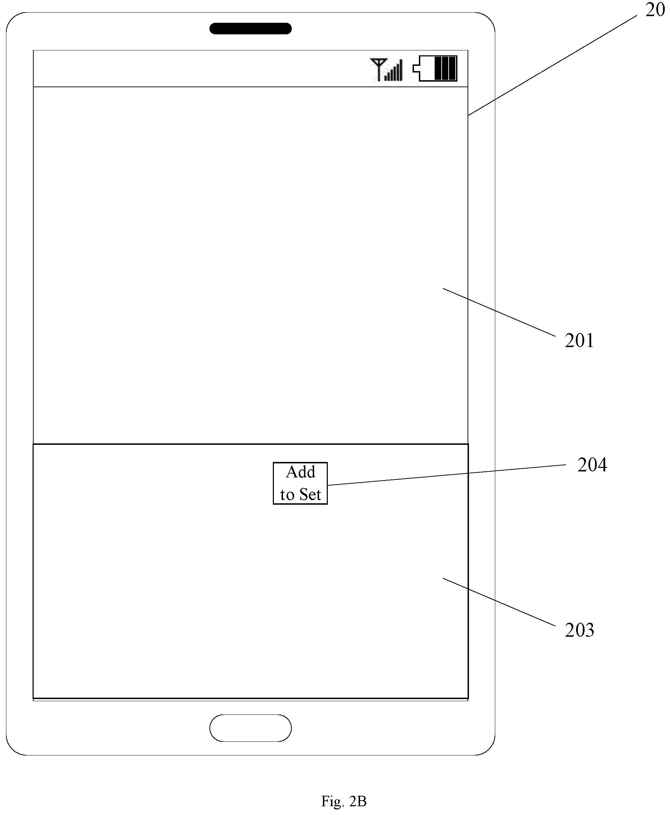

As an example, reference is made to Figs. 2A-2B. Fig. 2A shows the display of a video playback page 201 on a client display interface 20, and a video (i.e., media content) is being played on the video playback page 201. A sharing control 202 is displayed on the video playback page 201. Based on the video playback page 201, the media content processing page can be displayed through the user's long-press interactive operation on the interactive position on the video playback page 201, or through the user's trigger operation on the sharing control 202. Therefore, if the user performs a long-press interactive operation on the interactive position on the video playback page 201, or the user performs a trigger operation on the sharing control 202, a media content processing page 203 is displayed. Fig. 2B shows that the media content processing page 203 is displayed based on the video playback page 201, and an add-to-set control 204 is displayed on the media content processing page 203.

Moreover, in addition to displaying the add-to-set control 204, other controls should also be displayed on the media content processing page 203. Although other controls are not shown in Fig. 2B, it should be understood that the media content processing page 203 triggered by the long-press interactive operation to display and the media content processing page 203 triggered by the sharing control to display may be different, and other controls displayed therein may be different.

Further, in response to a trigger operation on the add-to-set control, a media content set page is displayed. The media content set page includes at least one media content set.

In some embodiments, for a media content set in the at least one media content set, the media contents in the media content set are related to each other.

For example, the media content set may contain videos related to animals or videos related to movies.

With regard to a media content in the media content set, for example, a short video set including fifteen short videos, the fifteen short videos can all be regarded as the media content in the media content set.

In some embodiments, the number of media content sets included on the media content set page depends on the number of media content sets created by the user to which the media content to be currently processed belongs.

That is, for a user, if a total of five media content sets are created, the media content set page here includes five media content sets; if only one media content set is created, the media content set page here includes only one media content set.

In some embodiments, the media content set page includes a plurality of different media content sets, and the display order of the plurality of different media content sets on the media content set page is the same as that of the plurality of different media content sets on the personal page.

In this implementation, when there are a plurality of media content sets, the set contents respectively corresponding to the plurality of media content sets should be different on the one hand. For example, the set content corresponding to a media content set 1 is short videos of landscapes, and the set content corresponding to a media content set 2 is short videos of characters.

On the other hand, the display order of the plurality of media content sets on the media content set page is consistent with that of the plurality of media content sets on the personal page. For example, all media content sets created by the user are displayed on the user's personal page, and the arrangement order is from the media content set 1 to media content set 3; then, the plurality of media content sets are also displayed in the display order from the media content set 1 to media content set 3 on the media content set page.

Through this implementation, it can be ensured that the media content sets displayed on the media content set page are consistent with the media content sets created by the user, so that the user can more rapidly select the required media content set.

In some embodiments, there are a plurality of media content sets, which may be displayed on the media content set page in the following manners: from top to bottom in the display order; from left to right in the display order, etc.

In some embodiments, the media content set in the at least one media content set is displayed through media content set information.

The set information includes at least one of: a set cover, a set icon, a set name, and the quantity of set contents.

The set cover may be the cover determined by the user when creating the set, or an uploaded cover image, or a picture captured by the system from the set contents as the cover, or a picture specified by the user from the set contents as the cover. The set icon is similar to the set cover and can be determined in a variety of implementations. The set name may be the name entered by the user when creating the set, or a name determined by the system, etc. The quantity of set contents is the information determined by the system according to the actual situation of the set contents. For example, if a set includes ten short videos, the number of set contents can be ten episodes.

In some embodiments, the media content set page can replace the media content processing page to be displayed on the media content playback page, and the corresponding display format may be consistent with the display format of the media content processing page.

In other embodiments, the media content set page can be displayed on a new page, which may be a preset picture background, or a blank page, etc.

Further, in response to receiving a selection instruction for a target media content set in the at least one media content set, the target media content is added to the target media content set.

In some application scenarios, the selection instruction for the target media content set is generated based on a selection operation on the target media content set.

The selection operation may be: a click operation on the set information of the target media content set, a touch operation on the position of the target media content set information, or a trigger operation on a specific control, etc., which are not limited here.

In this implementation, the selection instruction for the target media content set can be rapidly generated based on various selection operations on the target media content set, thereby efficiently performing subsequent processing.

In some application scenarios, the media content set page also includes a target add control corresponding to the target media content set, and a selection instruction for the target media content set is generated based on a trigger operation on the target add control corresponding to the target media content set.

In this implementation, each media content set is correspondingly configured with an add control, and the user can generate a corresponding selection instruction for the media content set by triggering the add control. At this time, the trigger operation on the add control is the aforementioned selection operation on the target media content set.

In this implementation, by configuring the add control, the user can rapidly initiate a selection instruction for the target media content through the trigger operation on the add control, thereby improving the interactive experience.

Further, the target media content can be added to the target media content set based on the selection instruction for the target media content set.

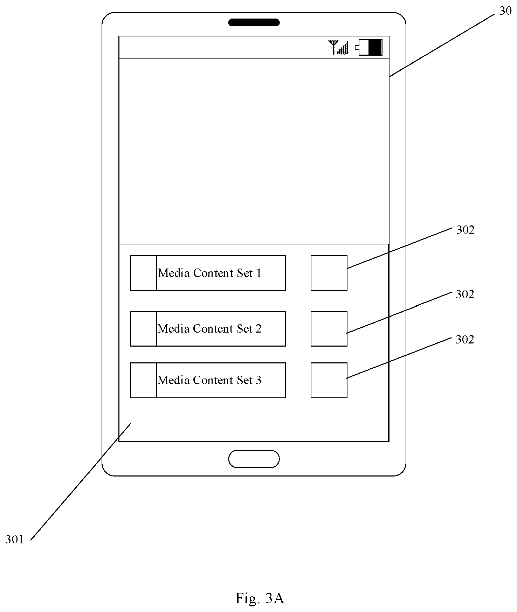

As an example, reference is made to Fig. 3A showing the display of a media content set page 301 on a client display interface 30. On the media content set page 301, three media content sets are displayed, namely, media content set 1, media content set 2, and media content set 3. Moreover, each media content set is correspondingly configured with an add control 302. If the user executes the trigger operation on the add control 302 corresponding to the media content set 1, the media content is added to the media content set 1.

Through the media content processing method of the implementations of the present disclosure, a processing request for the target media content can be initiated for the target media content playback page on the personal page, and the target media content can be added to the target media content set. Through this media content processing method, the user can rapidly and efficiently process media contents while playing the media contents based on his/her personal page.

Therefore, by means of the technical solution, media contents can be rapidly and conveniently added to a target media content set on a user's personal page, improving the user experience.

In some application scenarios, media contents can be successfully added to the target media content set. Therefore, the media content processing method also includes: in response to detecting that the target media content is successfully added to the set, canceling the display of the add control corresponding to the target media content set information; displaying an identifier for characterizing the success of adding to the set; and/or displaying a prompt message for indicating the success of adding to the set.

Detecting whether the media content is successfully added to the set may include: detecting whether the set includes the media content; if the set includes the media content, determining that the media content is successfully added to the set; otherwise, determining that the media content fails to be added to the set.

It can be understood that after the media content is successfully added to the set, on the one hand, there is a corresponding relationship between the media content and the corresponding set; on the other hand, the media content is classified into the corresponding media content set. Therefore, whether the media content is successfully added to the set can be rapidly determined through some corresponding detection methods.

In this implementation, if it is detected that the media content is successfully added to the set, the display of the add control corresponding to the target media content set information can be cancelled on the one hand, thereby preventing the user from repeatedly triggering the add control or other operations that would affect subsequent processing.

On the other hand, in one implementation, an identifier for characterizing the success of adding to the set is displayed. In another implementation, a prompt message for indicating the success of adding to the set is displayed. In another implementation, both an identifier for characterizing the success of adding to the set and a prompt message for indicating the success of adding to the set are displayed. Thus, the user can learn whether adding to the set is successful, improving the interactive experience.

The display position of the identifier for characterizing the success of adding to the set may be the display position of the add control corresponding to the target media content set. The display position of the prompt message for indicating the success of adding to the set may be the center position of the current display page.

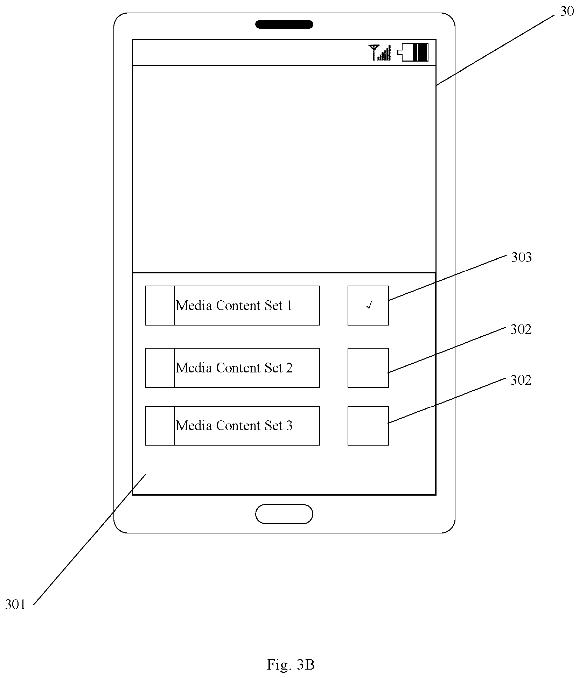

As an example, reference is made to Fig. 3B showing the display of the media content set page 301 on the client display interface 30. On the media content set page 301, three media content sets are displayed, namely, media content set 1, media content set 2, and media content set 3. The media content set 1 is the target media content set selected by the user through the add control 302. After detecting that the media content is successfully added to the media content set 1, the display of the add control 302 corresponding to the media content set 1 is cancelled, and the identifier, i.e., an add success identifier 303, for characterizing the success of adding to the set is displayed.

In other application scenarios, the media content cannot be successfully added to the set content corresponding to the target media content set due to some reasons. Therefore, the media content processing method also includes: in response to detecting that the media content fails to be added to the set, determining a reason for the failure of adding to the set; and generating, based on the reason for the failure of adding to the set, a prompt message for indicating the failure of adding to the set, and displaying the prompt message for indicating the failure of adding to the set.

In this implementation, if it is detected that the media content fails to be added to the set, a reason for the failure of adding to the set can be determined first, and a prompt message for indicating the failure of adding to the set is generated based on the reason for the failure of adding to the set and is then displayed, so that the user can learn not only the failure of adding to the set, but also the reason for the failure of adding to the set, improving the interactive experience.

In some embodiments, reasons for the failure of adding to a set include: network reasons, repeated addition, incorrect addition, etc.

The repeated addition refers to, for example, the impossibility of adding again if the media content is already included in the set; the incorrect addition refers to, for example, the impossibility of adding to the set again if the media content is already added to another set; the network reasons include slow network that leads to processing failure.

From the above reasons for the failure of adding, it can be seen that in some embodiments, before adding the media content to the target media content set, whether the media content is already included in a set can be detected first. If the media content is already included in a set, the addition fails by default. At this time, the reason for the failure of adding can be determined whether the set is the target media content set. If the set is the target media content set, the reason for the failure of adding is repeated addition; if the set is not the target media content set, the reason for the failure of adding is incorrect addition. If the media content is not included in a set, the operation of adding to the set is continued.

After learning the reason for the failure of adding, the user can choose, according to the reason for the failure of adding, to add to the set again or cancel adding to the set. If the user chooses to add to the set again, an add-to-set operation can be continued to be triggered through the add control. If the user chooses to cancel adding to the set, an add-to-set cancelling instruction can be triggered to cancel the display of the media content set page.

In some embodiments, when a failure of adding to a set is detected, a prompt message for indicating the failure of adding to the set can also be directly displayed. For example, the prompt message is: "Failed to add, please try again!"

Therefore, in some embodiments, the media content processing method also includes: in response to receiving an add-to-set cancelling instruction, cancelling the display of the media content set page.

The add-to-set cancelling instruction is generated based on a trigger operation on an exit control, or generated based on an interactive operation on any position outside the media content set page. The interactive operation here may be a long-press interactive operation or a tap interactive operation.

In this implementation, if not want to perform the operation of adding to the set, the user can initiate the add-to-set cancelling instruction according to the corresponding trigger operation to meet the different needs of the user in different situations, improving the interactive experience.

In other embodiments, if no user operations on the media content set page are detected within a preset time period, it can also be regarded as triggering the add-to-set cancelling instruction.

In some other application scenarios, if believing that there is no suitable media content set, the user can also trigger the add-to-set cancelling instruction, not limited to the above application scenarios.

In some application scenarios, if finding that there is no suitable media content set in the displayed media content sets, the user can create a new set. Therefore, the media content set page may also include a new set control. Accordingly, the media content processing method also includes: in response to a trigger operation on the new set control, displaying a new set page.

The new set control may be displayed at the bottom, top, or other positions different from the display position of the media content set of the media content set page.

The new set page may include: a set cover, a set title, set introduction and other information that needs to be set or entered, as well as some selection controls, enter controls, confirmation controls, etc.

In this implementation, a new set control is also provided on the media content set page. The user can flexibly choose between adding to a set and creating a new set through the new set control, improving the convenience and flexibility of media content and set management.

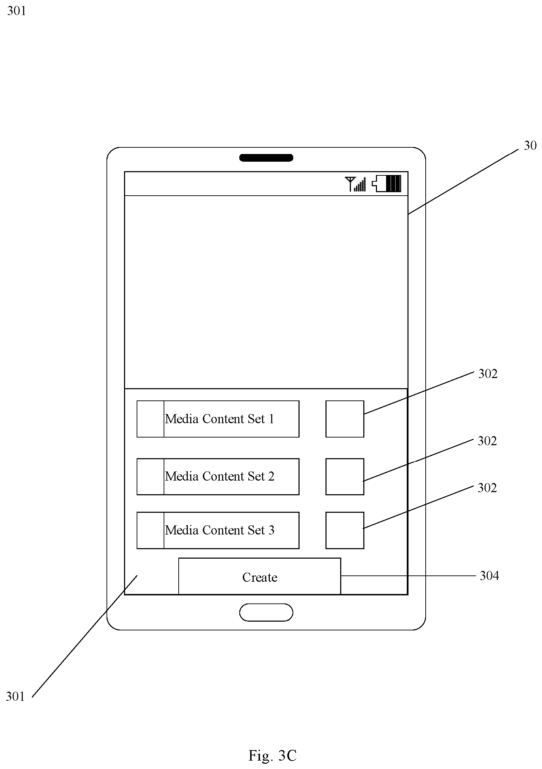

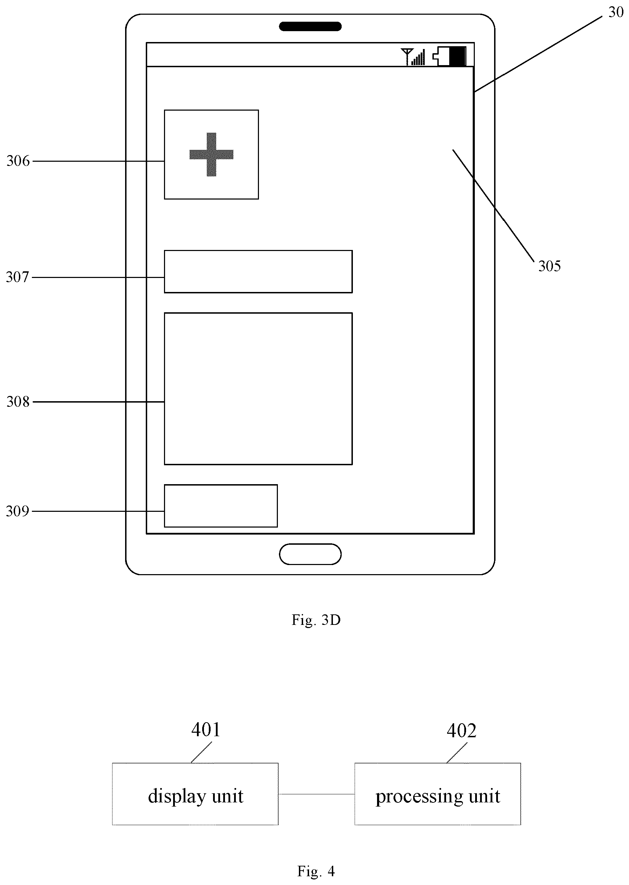

As an example, reference is made to Figs. 3C-3D. Fig. 3C shows the display of the media content set page 301 on the client display interface 30. On the media content set page 301, three media content sets are displayed, namely, media content set 1, media content set 2, and media content set 3, as well as add controls 302 corresponding to the three media content sets. A new set control 304 is also displayed below the three media content sets. After the user triggers the new set control 304, a new set page 305, which may be shown in Fig. 3D, is displayed on the client display interface 30. Three pieces of information to be configured of "Set Cover", "Set Title" and "Set Introduction" are displayed on the new set page 305, and corresponding configuration controls are respectively displayed below these three pieces of information to be configured. The configuration controls include: a set cover configuration control 306, a set title configuration control 307, a set introduction configuration control 308, and a confirmation control 309.

Further referring to Fig. 4, as an implementation for the method shown in the above figures, provided in the present disclosure is an embodiment of a media content processing apparatus. The apparatus embodiment corresponds to an embodiment of the media content processing method shown in Fig. 1. The apparatus can be specifically applied to various electronic devices.

As shown in Fig. 4, the media content processing apparatus of this embodiment includes:
a display unit 401, configured to, in response to a playback request for a target media content on a personal page, display a media content playback page of the target media content; and
a processing unit 402, configured to, in response to a processing request for the target media content that acts on the media content playback page, add the target media content to a target media content set.

In some embodiments, the display unit 401 is also configured to: in response to a trigger operation acting on the media content playback page, display a media content processing page, the media content processing page including an add-to-set control; and in response to a trigger operation on the add-to-set control, display a media content set page, the media content set page including at least one media content set. The processing unit 402 is also configured to: in response to receiving a selection instruction for a target media content set in the at least one media content set, add the target media content to the target media content set.

In some embodiments, a sharing control is displayed on the media content playback page. The display unit 401 is also configured to: in response to a sharing control trigger operation acting on the media content playback page, display a sharing panel, the sharing panel including an add-to-set control.

In some embodiments, the media content set page includes a plurality of different media content sets, and the display order of the plurality of different media content sets on the media content set page is the same as that of the plurality of different media content sets on the personal page.

In some embodiments, the media content set page also includes a target add control corresponding to the target media content set. The selection instruction for the target media content set is generated based on a trigger operation on the target add control corresponding to the target media content set.

In some embodiments, the display unit 401 is also configured to: in response to detecting that the target media content is successfully added to the set, cancel the display of the add control corresponding to the target media content set; display an identifier for characterizing the success of adding to the set; and/or display a prompt message for indicating the success of adding to the set.

In some embodiments, the processing unit 402 is also configured to: in response to detecting that the target media content fails to be added to the set, determine a reason for the failure of adding to the set. The display unit 401 is also configured to: generate, based on the reason for the failure of adding to the set, a prompt message for indicating the failure of adding to the set, and display the prompt message for indicating the failure of adding to the set.

In some embodiments, the selection instruction for the target media content set is generated based on a selection operation on the target media content set.

In some embodiments, the media content set page also includes a new set control. The display unit 401 is also configured to: in response to a trigger operation on the new set control, display a new set page.

In some embodiments, the display unit 401 is also configured to: in response to receiving an add-to-set cancelling instruction, cancel the display of the media content set page.

In some embodiments, the add-to-set cancelling instruction is generated based on a trigger operation on an exit control, or generated based on an interactive operation on any position outside the media content information set page.

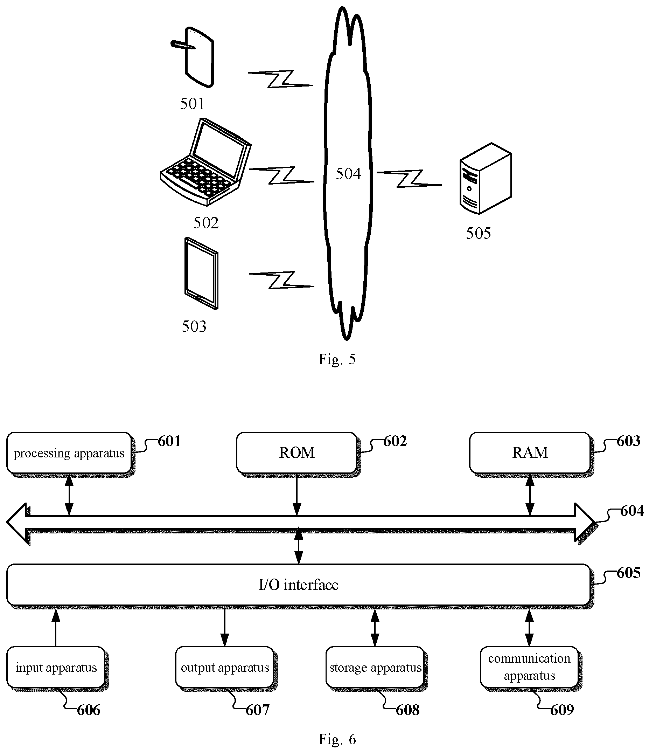

Reference is made to Fig. 5 showing an exemplary system architecture in which the media content processing method according to an embodiment of the present disclosure can be applied.

As shown in Fig. 5, the system architecture may include terminal devices 501, 502, 503, a network 504, and a server 505. The network 504 may be used as a medium to provide a communication link between the terminal devices 501, 502, 503 and the server 505. The network 504 may include various connection types, such as wired, wireless communication links, or fiber optic cables.

The terminal devices 501, 502, 503 may interact with the server 505 via the network 504 to receive or send messages, etc. Various client applications such as web browser applications, search applications and news and information applications can be installed on the terminal devices 501, 502, 503. The client applications in the terminal devices 501, 502, 503 can receive the user's instructions and perform corresponding functions according to the user's instructions, such as adding corresponding information to the information according to the user's instructions.

The terminal devices 501, 502, 503 may be hardware or software. When being hardware, the terminal devices 501, 502, 503 may be various electronic devices with display screens and supporting web browsing, including but not limited to smart phones, tablets, e-book readers, MP3 (Moving Picture Experts Group Audio Layer III) players, MP4 (Moving Picture Experts Group Audio Layer IV) players, laptops, desktops, etc. When being software, the terminal devices 501, 502, 503 may be installed in the electronic devices listed above. The terminal devices 501, 502, 503 can be implemented as a plurality of software or software modules (for example, software or software modules for providing distributed services), or can be implemented as a single software or software module, which is not specifically limited here.

The server 505 may be a server that provides various services, for example, receiving information acquisition requests sent by the terminal devices 501, 502, 503, acquiring display information corresponding to the information acquisition requests in various ways according to the information acquisition requests, and sending the relevant data of the display information to the terminal devices 501, 502, 503.

It needs to be noted that the media content processing method provided in an embodiment of the present disclosure may be executed by terminal devices, and accordingly, the media content processing apparatus may be provided in the terminal devices 501, 502, 503. In addition, the media content processing method provided in an embodiment of the present disclosure may also be executed by the server 505, and accordingly, the media content processing apparatus may be provided in the server 505.

It should be understood that the number of terminal devices, networks and servers in Fig. 5 is merely illustrative. Depending on the implementation requirements, there can be any number of terminal devices, networks, and servers.

Reference is made below to Fig. 6 showing a schematic structural diagram of an electronic device (e.g., the terminal devices or the server in Fig. 5) suitable for implementing the embodiments of the present disclosure. The terminal devices in the embodiments of the present disclosure may include but are not limited to mobile terminals such as mobile phones, laptops, digital broadcast receivers, PDAs (personal digital assistants), PADs (pads), PMPs (portable multimedia players), and vehicle-mounted terminals (such as vehicle-mounted navigation terminals), as well as fixed terminals such as digital TVs and desktops. The electronic device shown in Fig. 6 is merely an example and should not limit the functions and scope of use of the embodiments of the present disclosure.

As shown in Fig. 6, the electronic device may include a processing apparatus (such as a central processing unit and a graphics processor) 601, which can perform various appropriate actions and processes according to a program stored in a read-only memory (ROM) 602 or a program loaded from a storage apparatus 608 to a random access memory (RAM) 603. In the RAM 603, various programs and data necessary for the operation of the electronic device 600 are also stored. The processing apparatus 601, the ROM 602, and the RAM 603 are connected to each other via a bus 604. An input/output (I/O) interface 605 is also connected to the bus 604.

Typically, the following apparatuses can be connected to the I/O interface 605: input apparatuses 606 including, for example, a touch screen, a touchpad, a keyboard, a mouse, a camera, a microphone, an accelerometer, a gyroscope, etc.; output apparatuses 607 including, for example, a liquid crystal display (LCD), a speaker, a vibrator, etc.; storage apparatuses 608 including, for example, a magnetic tape, a hard disk, etc.; and communication apparatuses 609. The communication apparatuses 609 can allow the electronic device to communicate with other devices in a wireless or wired way to exchange data. Although Fig. 6 shows an electronic device having various apparatuses, it should be understood that it is not required to implement or provide all of the apparatuses shown. More or fewer apparatuses may alternatively be implemented or provided.

In particular, according to the embodiments of the present disclosure, the process described above with reference to the flowchart may be implemented as a computer software program. For example, an embodiment of the present disclosure includes a computer program product including a computer program carried on a non-transitory computer-readable medium, and the computer program contains program code for executing the method shown in the flowchart. In such an embodiment, the computer program can be downloaded and installed from a network via the communication apparatuses 609, or installed from the storage apparatuses 608, or installed from the ROM 602. When executed by the processing apparatus 601, the computer program performs the above functions defined in the method according to an embodiment of the present disclosure.

It needs to be noted that the computer-readable medium mentioned above in the present disclosure may be a computer-readable signal medium or a computer-readable storage medium or any combination of the above two. The computer-readable storage medium may, for example, be, but not limited to, an electronic, magnetic, optical, electromagnetic, infrared, or semiconductor system, apparatus, or device, or any combination of the above. More specific examples of the computer-readable storage medium may include, but are not limited to, an electrical connection having one or more conductors, a portable computer disk, a hard disk, a random access memory (RAM), a read-only memory (ROM), an erasable programmable read-only memory (EPROM or flash memory), optical fibers, a portable compact disk read-only memory (CD-ROM), an optical storage device, a magnetic storage device, or any suitable combination of the above. In the present disclosure, the computer-readable storage medium may be any tangible medium that contains or stores a program for use by or in connection with an instruction execution system, apparatus, or device. In the present disclosure, the computer-readable signal medium may include a data signal propagated in a baseband or as a portion of a carrier wave, in which computer-readable program code is carried. Such a propagated data signal may take a variety of forms, including but not limited to an electromagnetic signal, an optical signal, or any suitable combination of the above. The computer-readable signal medium may also be any computer-readable medium other than the computer-readable storage medium that can send, propagate or transmit a program for use by or in connection with an instruction execution system, apparatus, or device. The program code embodied on the computer-readable medium may be transmitted using any appropriate medium, including but not limited to: wires, optical cables, RF (radio frequency), etc., or any suitable combination of the above.

In some implementations, the client and server can communicate using any currently known or future developed network protocol such as HTTP (HyperText Transfer Protocol), and can be interconnected with any form or medium of digital data communication (e.g., a communication network). Examples of the communication network include a local area network ("LAN"), a wide area network ("WAN"), an internetwork (e.g., the Internet), and a peer-to-peer network (e.g., an ad hoc peer-to-peer network), as well as any currently known or future developed network.

The above computer-readable medium may be included in the above electronic device, or may exist independently without being installed in the electronic device.

The above computer-readable medium carries one or more programs. When the above one or more programs are executed by the electronic device, the electronic device:
in response to a playback request for a target media content on a personal page, displays a media content playback page of the target media content; and
in response to a processing request for the target media content that acts on the media content playback page, adds the target media content to a target media content set.

Computer program code for performing operations of the present disclosure may be written in one or more programming languages, or a combination thereof, including but not limited to object-oriented programming languages such as Java, Smalltalk, and C++, as well as conventional procedural programming languages such as "C" or similar programming languages. The program code may execute entirely on the user's computer, partly on the user's computer, as a stand-alone software package, partly on the user's computer and partly on a remote computer, or entirely on the remote computer or server. In cases involving a remote computer, the remote computer may be connected to the user's computer through any type of network, including a local area network (LAN) or a wide area network (WAN), or may be connected to an external computer (e.g., through the Internet using an Internet service provider).

The flowcharts and block diagrams in the accompanying drawings illustrate possibly implemented architectures, functions and operations of systems, methods and computer program products according to various embodiments of the present disclosure. In this regard, each block in the flowcharts or block diagrams may represent a module, a program segment, or a portion of code, which contains one or more executable instructions for implementing specified logical functions. It should also be noted that, in some alternative implementations, the functions noted in the blocks may occur out of the order noted in the accompanying drawings. For example, two blocks shown in succession may actually be executed substantially in parallel, or may sometimes be executed in the reverse order, depending on the functionality involved. It should also be noted that each box in the block diagrams and/or flowcharts as well as combinations of boxes in the block diagrams and/or flowcharts can be implemented by a dedicated hardware-based system that performs specified functions or operations, or can be implemented by a combination of dedicated hardware and computer instructions.

The involved units described in the embodiments of the present disclosure may be implemented by software or by hardware. In some cases, the names of the units do not constitute a limitation on the units themselves. For example, the display unit 401 can also be described as "a unit that displays, in response to a playback request for a target media content on a personal page, a media content playback page of the target media content".

The functions described above herein may be performed at least in part by one or more hardware logic components. For example and without limitation, exemplary types of hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, a machine-readable medium may be a tangible medium that can contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the above. More specific examples of the machine-readable storage medium would include an electrical connection based on one or more wires, a portable computer disk, a hard disk, a random access memory (RAM), a read-only memory (ROM), an erasable programmable read-only memory (EPROM or flash memory), optical fibers, a portable compact disk read-only memory (CD-ROM), an optical storage device, a magnetic storage device, or any suitable combination of the above.

The above description is merely preferred embodiments of the present disclosure and an illustration of the technical principles used. Those skilled in the art should understand that the scope of disclosure involved in the present disclosure is not limited to the technical solution formed by a specific combination of the above technical features, but should also cover other technical solutions formed by any combination of the above technical features or their equivalent features without departing from the above concepts of disclosure, for example, a technical solution formed by the above features replaced with the technical features with similar functions disclosed (but not limited to) in the present disclosure.

In addition, depicting various operations in a particular order should not be understood as requiring such operations be performed in the particular order shown or in a sequential order. Under certain circumstances, multitasking and parallel processing may be advantageous. Likewise, several specific implementation details contained in the above discussion should not be construed as limitations on the scope of the present disclosure. Certain features that are described in the context of separate embodiments can also be implemented in combination in a single embodiment. Conversely, various features that are described in the context of a single embodiment can also be implemented in a plurality of embodiments separately or in any suitable sub-combination.

Although this subject matter has been described in language specific to structural features and/or methodological acts, it should be understood that the subject matter defined in the appended claims is not necessarily limited to the specific features or acts described above. Rather, the specific features and acts described above are merely example forms of implementing the claims.

## Claims

1. A media content processing method, comprising:
in response to a playback request for a target media content on a personal page, displaying a media content playback page of the target media content; and
in response to a processing request for the target media content on the media content playback page, adding the target media content to a target media content set.

2. The media content processing method according to claim 1, wherein in response to a processing request for the target media content on the media content playback page, adding the target media content to a target media content set comprises:
in response to a trigger operation acting on the media content playback page, displaying a media content processing page, the media content processing page comprising an add-to-set control;
in response to a trigger operation on the add-to-set control, displaying a media content set page, the media content set page comprising at least one media content set; and
in response to receiving a selection instruction for a target media content set in the at least one media content set, adding the target media content to the target media content set.

3. The media content processing method according to claim 2, wherein a sharing control is displayed on the media content playback page; in response to a trigger operation acting on the media content playback page, displaying a media content processing page, the media content processing page comprising an add-to-set control comprises:
in response to a sharing control trigger operation acting on the media content playback page, displaying a sharing panel, the sharing panel comprising an add-to-set control.

4. The media content processing method according to claim 2, wherein the media content set page comprises a plurality of different media content sets, and a display order of the plurality of different media content sets on the media content set page is the same as that of the plurality of different media content sets on the personal page.

5. The media content processing method according to claim 2, wherein the media content set page further comprises a target add control corresponding to the target media content set; the selection instruction for the target media content set is generated based on a trigger operation on the target add control corresponding to the target media content set.

6. The media content processing method according to claim 5, further comprising:
in response to detecting that the target media content is successfully added to the set, canceling display of the target add control corresponding to the target media content set;
displaying an identifier for characterizing success of adding to the set; and/or displaying a prompt message for indicating success of adding to the set.

7. The media content processing method according to claim 5, further comprising:
in response to detecting that the target media content fails to be added to the set, determining a reason for the failure of adding to the set; and
generating, based on the reason for the failure of adding to the set, a prompt message for indicating the failure of adding to the set, and displaying the prompt message for indicating the failure of adding to the set.

8. The media content processing method according to claim 2, wherein the selection instruction for the target media content set is generated based on a selection operation on the target media content set.

9. The media content processing method according to claim 2, wherein the media content set page further comprises a new set control; the media content processing method further comprises:
in response to a trigger operation on the new set control, displaying a new set page.

10. The media content processing method according to claim 2, further comprising:
in response to receiving an add-to-set cancelling instruction, cancelling the display of the media content set page.

11. The media content information processing method according to claim 10, wherein the add-to-set cancelling instruction is generated based on a trigger operation on an exit control, or generated based on an interactive operation on any position outside the media content information set page.

12. A media content processing apparatus, comprising:
a display unit, configured to, in response to a playback request for a target media content on a personal page, display a media content playback page of the target media content; and
a processing unit, configured to, in response to a processing request for the target media content on the media content playback page, add the target media content to a target media content set.

13. An electronic device, comprising:
one or more processors; and
a storage apparatus, configured to store one or more programs,
when the one or more programs are executed by the one or more processors, the one or more processors are caused to implement the media content processing method as claimed in any one of claims 1-11.

14. A computer-readable medium having a computer program stored thereon, which, when executed by a processor, implements the media content processing method as claimed in any one of claims 1-11.
